# EUROPEAN PATENT APPLICATION

(11) **EP 2 325 137 A1**
(43) Date of publication of application: **25.05.2011**
(21) Application number: 10187186.1
(22) Date of filing: 11.10.2010
(51) Int. Cl.: C01B 3/50, C01B 3/52, C01B 3/56, C10J 3/00

(54) **Hydrogen recovery and methane production from residual fuels**

(30) Priority: 28.10.2009 US 607605
(71) Applicant: L'Air Liquide Société Anonyme pour l'Etude et l'Exploitation des Procédés Georges Claude, 75007 Paris (FR)
(72) Inventor: Vauk, Dennis A., Houston, TX 77095 (US); Grover, Bhadra S., Sugar Land, TX 77479 (US)
(74) Representative: Conan, Philippe Claude

(57) **Abstract**

A method of hydrogen and methane recovery from syngas from a gasifier (304) is provided. Then directing a raw syngas stream from an acid gas removal system (309) to a CO and methane removal system (314). Then returning the CO and methane stream to the gasifier, and exporting the hydrogen stream as a product.

## Description

Hydrogen is most often manufactured using natural gas as a feedstock through the steam methane reforming process. With the current high prices of natural gas it is preferred to manufacture hydrogen from lower cost sources of fuel such as residual fuels. Residual fuels from refineries consist of petroleum coke, visbreaker tar, pitch from deasphalting processes, vacuum residues, atmospheric residues and similar fuels. Coal is also a desirable low cost fuel that can be used to produce hydrogen.

The typical method of producing hydrogen from residual fuels or coal is to gasify it by partially oxidizing it by contact with oxygen and steam or water at elevated temperatures to form a syngas. The syngas consists of hydrogen, carbon monoxide, methane and carbon dioxide. Higher quantities of hydrogen are usually produced by further reacting the syngas with steam over a catalyst to promote the water gas shift reaction of carbon monoxide and steam to hydrogen and carbon dioxide.

After the removal of acid gases such as hydrogen sulfide and carbon dioxide in processes such as amine contactors, Selexol or Rectisol units, the hydrogen still needs to be purified. Hydrogen can be further purified to remove residual amounts of Carbon monoxide through a catalytic reaction to form methane (methanation) and water. This will produce a final product hydrogen stream with about 97% purity. The remaining composition is methane, nitrogen and argon. If higher purity hydrogen (>99%) is desired, the hydrogen is further processed through a Pressure Swing Adsorption (PSA). Due to the limits of PSA technology, the typical hydrogen recovery is about 87-90%.

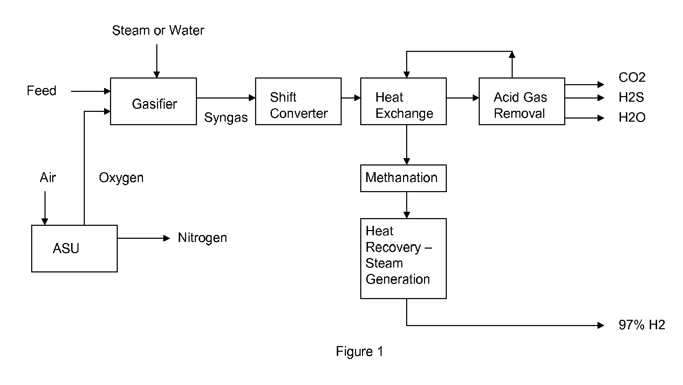

Figure 1 shows a typical hydrogen production from a gasifier with methanation for the final hydrogen purification as known in the prior art. For this process, the hydrogen recovery is near 100%, but the purity is limited by the purity of the oxygen coming in and the degree of conversion in the shift reactor. Typical purity would be about 97%. The disadvantage of this process is that hydrogen purity is significantly lower than that expected by refiners. Refiners have designed their processes for 99.9% purity hydrogen that can be obtained from a PSA. The lower purity is a disadvantage for using methanation as the final purification of the hydrogen.

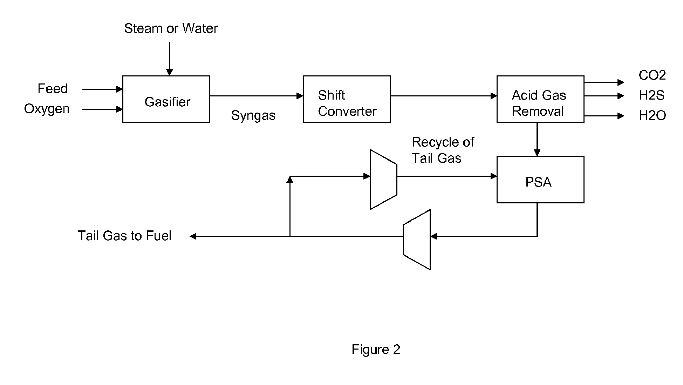

Figure 2 shows a typical hydrogen production from a gasifier with PSA for hydrogen purification as known in the prior art. With a PSA, recovery of hydrogen is limited to about 87-90% for production of 99.9% purity hydrogen. In order to increase the recovery of hydrogen, a recycle compressor can be added to route the tail gas back to the PSA. With recycle, the recovery can be increased to about 92-95%. The ultimate recovery is limited by the amount of purge that needs to be taken to remove the methane, and residual carbon monoxide (from the gasifier and shift reactions), and nitrogen and argon that are brought in with the oxygen.
The present invention provides a process for producing pure hydrogen and recovering methane from gasifier syngas.

In one embodiment of the present invention a method of hydrogen purification and methane recovery from syngas from a gasifier is provided. This method includes directing a raw syngas stream from an acid gas removal system, the raw syngas stream comprising CO, methane, water, and hydrogen stream to a CO and methane removal system, thereby producing pure hydrogen stream and a stream comprising CO and methane. This method also includes returning the CO and methane stream to the gasifier, and exporting the hydrogen stream as a product.
Figure 1 illustrates a typical hydrogen production from a gasifier with methanation for the final hydrogen purification as known in the prior art.
Figure 2 illustrates a typical hydrogen production from a gasifier with PSA for hydrogen purification as known in the prior art.
Figure 3 illustrates one embodiment of the present invention, utilizing a cryogenic CO and Methane removal system.
Figure 4 illustrates one embodiment of the present invention, utilizing cryogenic separation and a TSA.

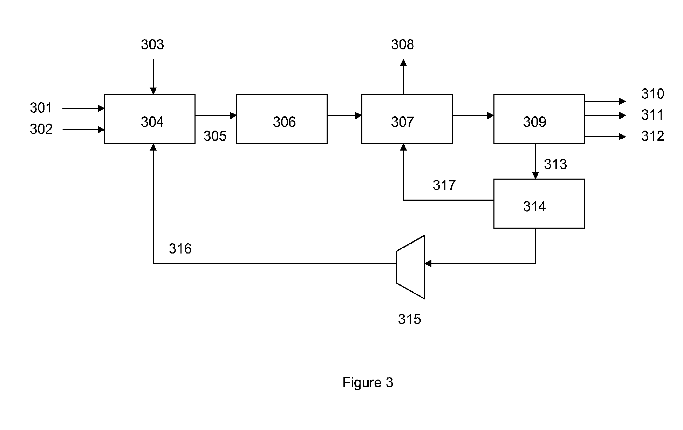

Turning now to figure 3, the invention is a process for production of hydrogen **317** from residual fuels **301.** In the present invention, feedstock for the hydrogen production unit **301** can be refinery residues such as petroleum coke, visbreaker tar, pitch from deasphalting processes, vacuum residues, atmospheric residues and similar fuels or coal. The feed **301** is combined with oxygen **302** produced in an Air Separation Unit (ASU) (not shown). The purity of the ASU is adjusted in order to be in the range of 99% to 99.98% Oxygen. 99.5 % Oxygen may be preferred considering power consumption in the ASU .

The oxygen **302** and the feed **301** are fed to the gasifier reactor **304.** In some processes solid feeds are combined with water **303** to form a slurry. In other processes, solid or liquid feeds **301** are combined with steam **303** and oxygen **302** and fed to the gasifier reactor **304.** In the gasifier reactor **304** the feed is converted to a raw syngas **305** comprised of hydrogen, carbon monoxide, carbon dioxide, methane, water and hydrogen sulfide. Residual argon and nitrogen coming in with the oxygen will also be present in the syngas. In some gasification processes, the syngas flows to a heat exchanger to produce steam (not shown). In other gasification process, the syngas is quenched directly with water to cool it down (not shown). Solids can be removed as a slag or through filtration of the resulting water.

The raw syngas **305** if then fed to a shift converter **306** where it is contacted with a catalyst to promote the water gas shift reaction. For quench systems, no additional steam is necessary for the shift reaction. If the syngas is used to produce steam in a heat exchanger, steam will need to be injected into the syngas upstream of the shift converter. The CO shift is done in multiple stages with intercooling between the two stages.

The residual CO at the outlet of the last stage is in the range of 0.2 to 2%. The product of the shift reactor will be mostly hydrogen, carbon dioxide, hydrogen sulfide, methane, residual carbon monoxide and the argon and nitrogen that entered with the oxygen and excess water. The shifted syngas is cooled down by indirect heat exchange **307.** Indirect contact heat exchanger **307** then transfers heat indirectly between the BFW or other process streams **318** (not shown) and the hot shifted syngas stream thereby producing a cooled, shifted syngas stream and steam or other elevated temperature process streams **308.** The cooled, shifted syngas stream is then fed to the acid gas removal (AGR) system **309** where excess water **312,** carbon dioxide **310,** and hydrogen sulfide **311** are removed, and raw hydrogen stream **313** is produced. If additional dryers are necessary, they may be added to the system as required by one skilled in the art.

Raw hydrogen stream **313** will contain un-shifted carbon monoxide, methane and mostly hydrogen along with residual nitrogen and argon. Methanol is the preferred solvent (e.g. Rectisol Process) for acid gas removal. When using methanol, the syngas stream is cooled to low temperatures, about -40 ° to about - 60° C. There are other solvents such as Selexol and MDEA used for acid gas removal. The Selexol solvent operates in the range of about +10 ° to about -20 ° C, while MDEA based solvent run at ambient temperatures.

After acid gas removal, the vapor stream **313** containing hydrogen, methane, CO and residual argon and nitrogen is further purified by passing it over an adsorbent **314** at the low temperatures where the CO and methane are adsorbed. A multiple bed temperature-swing-adsorption (TSA) **314** unit may be used to remove the impurities. Methane is removed down to less than 1000 ppm, preferably below 100 ppmv. CO is removed down below 10 ppmv, preferably below 1 ppmv.

TSA **314** may be regenerated by either direct or indirect heat exchange with a warm fluid stream. In embodiments where TSA **314** is regenerated by direct heat exchange, the warm fluid stream may be, but is not limited to, a slip stream of hydrogen product gas In embodiments where TSA **314** is regenerated by indirect heat exchange, the warm fluid stream may be, but is not limited to, steam, ambient air, or the warm gas stream entering the AGR system.

Whereas, in the current state-of-the-art, the typical acid gas removal system (such as the Rectisol process) has an inlet gas stream at approximately ambient temperature, and a treated outlet gas stream also at approximately ambient temperature, the internal process is at temperature of about -40 ° to about -60°C. Typically if a temperature swing adsorption (TSA) unit is located downstream of the acid gas removal system, the ambient (or above ambient) temperature gas stream must again be cooled to approximately this same low temperature. One important aspect of the present invention is the thermal integration of the TSA with the AGR. According to the present invention, the low temperature TSA process is performed after the AGR process, but before the treated gas leaves the AGR system at ambient temperature. This improves the overall thermodynamic efficiency of the plant, among other things. This integration may be performed by any way known in the art.

Adsorption at cryogenic temperature in adsorbent **314** is a key part of this invention. The adsorption temperature range can be between about -100 ° to about +10°C. For methanol based acid gas removal processes (for example the Rectisol process), the gas out of the CO2 absorber is between about -40 ° and about -60°C, and can be sent directly to the TSA unit. Integration of cryogenic adsorption with chilled methanol acid gas removal process is also an important feature of this invention. The purified hydrogen at the outlet of TSA is sent back to the acid gas removal process for recovery of cold, as shown in figure 5. For other processes, such as Selexol or MDEA, the gas out of the absorber may have to be chilled down to the desired range of -40 to -60° C before it is fed to the TSA unit.

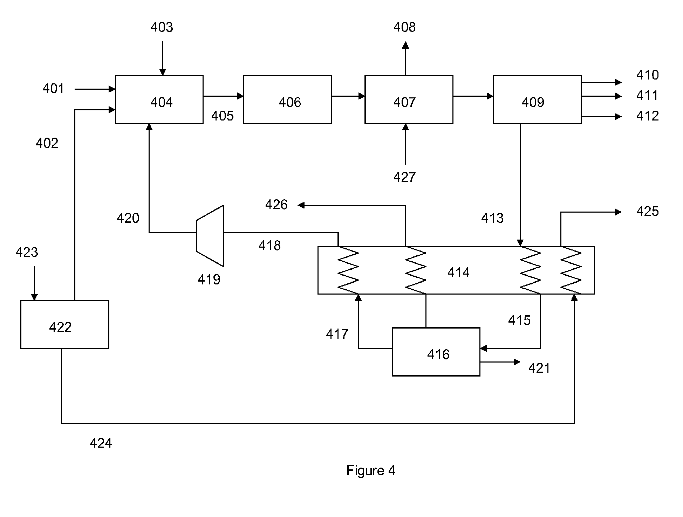

Turning now to figure 4, the invention is a process for production of hydrogen **426** from residual fuels **401.** In the present invention, feedstock for the hydrogen production unit **401** can be refinery residues such as petroleum coke, visbreaker tar, pitch from deasphalting processes, vacuum residues, atmospheric residues and similar fuels or coal. The feed **401** is combined with oxygen **402** produced in an Air Separation Unit (ASU) **422.** The purity of the oxygen **402** from ASU **422** is adjusted in order to be in the range of 99% to 99.98% Oxygen. 99.5 % Oxygen may be preferred considering power consumption in the ASU.

The oxygen **402** and the feed **401** are fed to the gasifier reactor **404.** In some processes solid feeds are combined with water **403** to form a slurry. In other processes, solid or liquid feeds **401** are combined with steam **403** and oxygen **408** and fed to the gasifier reactor **404.** In the gasifier reactor **404** the feed is converted to a raw syngas **405** comprised of hydrogen, carbon monoxide, carbon dioxide, methane and hydrogen sulfide. Residual argon and nitrogen coming in with the oxygen will also be present in the syngas. In some gasification processes, the syngas flows to a heat exchanger to produce steam (not shown). In other gasification process, the syngas is quenched directly with water to cool it down (not shown). Solids can be removed as a slag or through filtration of the resulting water.

The raw syngas **405** if then fed to a shift converter **406** where it is contacted with a catalyst to promote the water gas shift reaction. For quench systems, no additional steam is necessary for the shift reaction. If the syngas is used to produce steam in a heat exchanger, steam will need to be injected into the syngas upstream of the shift converter. The CO shift is done in multiple stages with intercooling between the two stages.

The residual CO at the outlet of the last stage is in the range of 0.2 to 2%. The product of shift reactor **406** will be mostly hydrogen, carbon dioxide, hydrogen sulfide, methane, residual carbon monoxide and argon and nitrogen that entered with the oxygen and excess water. The shifted syngas is cooled down by indirect heat exchange **407.** Indirect contact heat exchanger **407** then transfers heat indirectly between the BFW or other process streams **427** and the hot shifted syngas stream thereby producing a cooled, shifted syngas stream and steam or other elevated temperature process streams **408.**

The cooled, shifted syngas stream is then fed to the acid gas removal system **409** where excess water **412,** carbon dioxide **410,** and hydrogen sulfide **411** are removed. The resulting hydrogen stream **413** will contain un-shifted carbon monoxide, methane and mostly hydrogen along with residual nitrogen and argon.

Methanol is the preferred solvent (e.g. Rectisol Process) for use in acid gas removal system **409.** When using methanol, the syngas stream is cooled to low temperatures, about -40 to -60°C. There are other solvents such as Selexol and MDEA used for acid gas removal. The Selexol solvent operates in the range of between about +10 ° and about -20 °C, while MDEA based solvent run at ambient temperatures.

After acid gas removal, the vapor stream **413,** containing hydrogen, methane, CO and residual argon and nitrogen is cooled to cryogenic temperatures (approximately -160 °C) by indirect heat exchange in heat exchanger **414,** against liquid nitrogen **424** from ASU **422** and with CO and Methane **417** from separation and **TSA 416.** The preferred cryogenic temperature, to TSA **416,** would be between about -200 ° to about -60 °C. The stream **416** temperature must be kept above the freezing temperature of methane at the given conditions for **416.**

After cooling, vapor stream **415** is further purified by passing it over an adsorbent **416** at the low temperatures where the CO and methane are adsorbed. A multiple bed temperature-swing-adsorption (TSA) unit **416** may be used to remove the impurities. The cold waste gas (or purge gas) stream **421** containing hydrogen, nitrogen, argon, and CO may be sent to a boiler (not shown) or other source of combustion after recovery of cold in **414.** Methane is removed down to less than 1000 ppm, preferably below 100 ppmv. CO is removed down below 10 ppmv, preferably below 1 ppmv.

Adsorption at cryogenic temperature in separation and TSA unit **416** is a key part of this invention. The adsorption temperature range can be about -200 ° to about -60 °C. For methanol based acid gas removal processes, the gas out of the CO2 absorber is between about -40 ° and about -60°C, and can be sent directly to the TSA unit. Integration of cryogenic adsorption with chilled methanol acid gas removal process is also an important feature of this invention. The purified CO + methane stream **417** at the outlet of TSA **416** may be sent back to the acid gas removal process **409** for recovery of cold. For other processes, such as Selexol or MDEA, the gas out of the absorber may have to be chilled down to the desired range of about -40 ° to -60° C before it is fed to the TSA unit. An interchanger that exchanges cold between the incoming gas and effluent from the TSA will reduce the load on the refrigeration unit.

Methanol wash and Selexol processes remove water along with acid gases. Dew point of the effluent from acid wash has to be kept in mind, as it should be lower than the adsorption temperature of the TSA unit. A drier may be required between the acid gas removal and cryogenic adsorption unit for removal of moisture and any residual CO2 that could freeze. The chilling of the gas can also be done by integrating it with ASU **422.**

The CO and Methane stream **417** that is separated in separation unit **416** is sent to heat exchanger **414,** where it exchanges heat with pure hydrogen stream **426,** impure hydrogen steram **413** and liquid nitrogen stream **424.** Resulting CO and Methane stream **418** may be compressed in compressor **419** and sent to gasifier **404.** Nitrogen stream **424,** from air separation unit **422,** is sent to heat exchanger **414** where it is heated and vaporized, resulting in product gaseous nitrogen steam **425.**

Once the adsorbent is loaded with impurities, it is taken off line and the impure hydrogen stream is switched to a regenerated bed of adsorbent. To regenerate the adsorbent, a stream of warm pure hydrogen is passed over the adsorbent bed to heat it up. As the adsorbent heats up, CO and methane and any argon, nitrogen and hydrogen present are desorbed from the adsorbent. The effluent from the regeneration is compressed and returned to the gasifier where the methane is converted to CO and Hydrogen.

Hydrogen recovery for this process is 90 -100% with purity of 99.0 to 99.99% requirements. The ultimate purity is determined by the argon and nitrogen impurities coming in with the oxygen, and the extent of argon and N2 removal in the TSA. The recycle of methane and CO recovered in the TSA unit increases the overall hydrogen capacity of the unit for the same amount of residue fuel being gasified.

In a variation of the previous embodiment, the regeneration gas from the TSA is not recycled back to the gasifier, but is instead used as fuel for a process heater or a boiler raising steam (not shown). In this case the purity of this hydrogen can exceed 99.99%. The hydrogen recovery is dependent on the amount of impurities (Argon and Nitrogen) coming in with the oxygen, but can be as high as 95-99.9% with high purity oxygen.

## Claims

1. A method of hydrogen and methane recovery from syngas from a gasifier, comprising;
a) directing a raw syngas stream from an acid gas removal system, said raw syngas stream comprising CO, methane, and hydrogen stream to a CO and methane removal system, thereby producing pure hydrogen stream and a stream comprising CO and methane
b) returning said CO and methane stream to said gasifier, and
c) exporting said hydrogen stream as product.

2. The method of claim 1, wherein said syngas is produced in a hydrogen production unit from refinery residues that are selected from the group consisting of petroleum coke, visbreaker tar, pitch from deasphalting processes, vacuum residues, atmospheric residues, and coal.

3. The method of claim 1, wherein said CO and methane removal system comprises temperature swing adsorption unit.

4. The method of claim 3, further comprising an indirect heat exchanger that exchanges heat between said raw syngas prior to entry into said acid gas removal system, and said product hydrogen stream after exiting said temperature swing adsorption unit.

5. The method of claim 3, wherein said raw syngas stream exiting said acid gas removal system is at a temperature of between about -40 C and about -60 C.

6. The method of claim 5, wherein said raw syngas enters said temperature swing adsorption unit at a temperature of between about -40 C and about -60 C.

7. The method of claim 1, wherein said product hydrogen stream has less than about 10 ppmv of carbon monoxide.

8. The method of claim 7, wherein said product hydrogen stream has less than about 1 ppmv of carbon monoxide.

9. The method of claim 1, wherein said product hydrogen stream has a purity of between about 99.0% and about 99.99%.

10. The method of claim 9, wherein the hydrogen recovery of said method is greater than about 90%.

11. The method of claim 10, wherein said hydrogen recovery of said method is greater than about 95%.
